# FASCICULE DE BREVET EUROPEEN

(11) **EP 3 632 063 B1**
(45) Date de publication et mention de la délivrance du brevet: **23.11.2022**
(21) Numéro de dépôt: 18748951.3
(22) Date de dépôt: 30.05.2018
(51) Int. Cl.: H04L 51/04, H04L 51/02

(54) **MISE A JOUR DE MESSAGES ECHANGÉS AVEC UN AGENT CONVERSATIONNEL**
AKTUALISIERUNG VON AUSGETAUSCHTEN MELDUNGEN MIT EINEM KONVERSATIONELLEN AGENT
UPDATING MESSAGES EXCHANGED WITH A CONVERSATIONAL AGENT

(30) Priorité: 31.05.2017 FR 1754819
(43) Date de publication de la demande: 08.04.2020
(73) Titulaire: Orange, 92130 Issy-les-Moulineaux (FR)
(72) Inventeur: LE HUEROU, Emmanuel, 92326 Châtillon Cedex (FR); TOUTAIN, François, 92326 Châtillon Cedex (FR)
(86) Numéro de dépôt international: PCT/FR2018/000150
(87) Numéro de publication internationale: WO 2018/220297

(56) Documents cités:
- EP-A1- 2 249 530
- EP-A1- 2 797 284
- WO-A1-2014/176896
- US-A1- 2008 104 169

## Description

### Domaine technique

La présente invention se rapporte au domaine des télécommunications et porte plus particulièrement sur un procédé pour modifier une pluralité de messages instantanés échangés lors d'une communication entre un terminal et un dispositif de communication.

### Art antérieur

Le document EP 2 249 530 A1 (RESEARCH IN MOTION LTD [CA]) 10 novembre 2010 divulgue l'actualisation de données d'horodatage dans un message instantané en fonction de la réponse d'un serveur.

Les communications de type messagerie instantanée connaissent un fort engouement de la part du public depuis quelques années. En effet, ce mode de communication offre plus d'interactivité qu'une communication par courrier électronique tout en étant moins intrusif qu'une communication vocale. L'adoption massive de ce mode de communication et l'arrivée sur le marché de terminaux mobiles à écran tactile s'est accompagnée d'une évolution des interfaces utilisateurs permettant de faciliter ce mode de communication. Ainsi, les interfaces utilisateurs convergent aujourd'hui vers une vue conversationnelle dans laquelle les messages émis et les messages reçus sont présentés dans des bulles disposées de part et d'autre de l'écran du terminal et ordonnées de manière chronologique. A quelques exceptions près, ce type de présentation sous forme de conversation est prédominant sur la plupart des terminaux et des applications de messagerie, toutes marques confondues.

Le contenu de tels messages instantanés n'est pas limité à du texte. Ils peuvent contenir un contenu dit « riche », comme par exemple du texte formaté, des images ou encore des éléments d'interaction tels que des liens hypertextes ou des boutons d'action.

Ce type de communication est à tel point plébiscité qu'il n'est aujourd'hui plus réservé aux échanges entre personnes physiques. En effet, il est possible aujourd'hui d'échanger des messages avec des robots logiciels capables d'interpréter des messages envoyés par des utilisateurs et d'y répondre de manière plus ou moins pertinente. On peut citer par exemple des robots spécialisés dans les prévisions météorologiques capables de répondre à des questions formulées en langage naturel, du type « *quel temps fera-t-il demain à Paris ?* ». Ainsi, un utilisateur dispose d'une interface unifiée pour communiquer avec d'autres utilisateurs et accéder à des services. Ce type de robot capable d'interagir avec des utilisateurs en échangeant des messages est parfois appelé « *agent conversationnel* » ou « chatbot » en anglais.

L'usage de ce type de communication s'élargit encore aujourd'hui avec l'avènement du « *commerce conversationnel ».* Le commerce conversationnel met en œuvre des agents conversationnels adaptés pour permettre à des utilisateurs d'effectuer des commandes de biens ou de services en formulant des requêtes en langage naturel, réaliser des transactions financières ou encore effectuer des réservations. Ainsi, les utilisateurs n'ont plus besoin de télécharger une application dédiée ou d'accéder à un site Web pour passer commande, et le fournisseur de service n'a pas besoin d'éditer et de maintenir une application ou un site Web pour que les utilisateurs puissent accéder à ses services.

Dans le cadre d'une commande effectuée via un échange de messages instantanés avec un agent conversationnel, il est courant qu'un utilisateur reçoive des messages contenant des indications sur l'avancement d'une commande. Parmi ces messages, certains peuvent contenir des liens hypertexte permettant par exemple d'ouvrir une page web à partir de laquelle il est possible de suivre la livraison d'un colis, ou encore des boutons pour annuler une commande ou repasser une commande identique à une commande précédente. D'une manière générale, des messages instantanés peuvent contenir des éléments d'interaction qui permettent le déclenchement d'actions et/ou l'accès à des informations qui ne sont pas adaptées à une visualisation directement dans un message.

Ces éléments d'interactions dans les messages instantanés améliorent l'expérience utilisateur mais présentent un inconvénient.

Une caractéristique des communications par messagerie instantanée est qu'un historique des messages échangés est conservé. Ainsi, un utilisateur peut remonter en arrière dans une liste de messages échangés pour relire des échanges passés et retrouver par exemple la référence d'une commande particulière. Parmi ces messages mémorisés, certains peuvent contenir des éléments d'interaction devenus obsolètes. Par exemple, un lien hypertexte pour suivre l'acheminement d'un colis devient inutile une fois le colis livré. Pourtant, il apparait toujours dans l'historique et une interaction sur un tel lien déclenche une action dont le résultat est indéterminé dès lors que le produit a été livré à son destinataire.

Ainsi, les utilisateurs peuvent déclencher des actions devenues obsolètes à partir de messages reçus auparavant et mémorisés par le terminal. Plus généralement, le contenu de messages obsolètes peut introduire une confusion pour l'utilisateur d'un terminal.

Il n'existe malheureusement pas, dans l'état de la technique, de solutions efficaces pour prémunir un utilisateur contre l'utilisation d'informations ou de liens obsolètes contenus dans un historique de messages instantanés échangés avec un agent conversationnel.

### Résumé de l'invention

La présente invention est définie par les revendications indépendantes. Des modes de réalisation supplémentaires sont définis par les revendications dépendantes. Un procédé de mise à jour d'au moins un message échangé dans une conversation de messagerie instantanée entre un terminal et un agent conversationnel est proposé selon la revendication 1.

De manière classique, les applications de messagerie instantanée affichent les messages émis et reçus dans des bulles de conversation. Une telle bulle de conversation correspond à une zone dans laquelle est affiché un message particulier. Le procédé permet la modification du contenu d'une ou plusieurs de ces bulles de conversation de manière à ce qu'une valeur ou tout autre élément obsolète du message soit reconnue comme telle par l'utilisateur et/ou à ce qu'une action ne puisse être déclenchée à partir de ces bulles.

Ainsi, lorsqu'un événement relatif à l'obsolescence d'au moins un des messages de la conversation est détecté, les messages concernés sont mis à jour afin de prémunir un utilisateur du terminal sur lequel est mis en œuvre le procédé contre des actions dont le résultat serait indéterminé.

Le concept inventif réside dans le fait de marquer à l'aide d'un indicateur de validité des messages ou des parties de messages, comme par exemple des éléments d'interactions compris dans des messages. Un tel indicateur permet d'indiquer que la validité de l'élément auquel est associé l'indicateur est temporaire. Il s'agit par exemple d'une valeur booléenne qui conditionne la façon dont le terminal va restituer l'élément. Lorsqu'un évènement relatif à l'obsolescence d'un message survient, la valeur de l'indicateur est modifiée. Le terminal peut ainsi modifier la façon dont le message est restitué et prémunir l'utilisateur du terminal contre l'utilisation d'une information ou d'un lien périmé contenu dans un message.

Par exemple, lorsqu'un nouveau message est émis par un agent conversationnel, l'indicateur de validité associé à certains éléments d'interaction permettant de déclencher des actions susceptibles de devenir obsolètes est initialisé avec une valeur « vrai ». Une telle valeur indique par exemple que tous ces champs sont initialement, mais temporairement, pertinents. Ainsi, la présence d'un indicateur de validité associé à une valeur ou un élément d'interaction contenu dans un message indique que la valeur ou l'action associée est susceptible de devenir obsolète. La logique de service associée à l'agent conversationnel détermine si un champ donné dans un message doit recevoir un indicateur de validité ou s'il s'agit d'un champ « inerte », c'est-à-dire un champ qui ne deviendra jamais obsolète. Par exemple, une action de suivi de livraison recevra un indicateur de validité positionné à « vrai » car cette action est susceptible d'être obsolète à un moment donné. Une action de type « information sur le service » pourra être considérée comme un champ inerte, car cette action reste toujours possible. Bien entendu, l'indicateur de validité peut prendre différentes formes autre qu'une forme booléenne. Il peut s'agir par exemple d'une chaîne de caractère ou d'une valeur numérique quelconque.

Le procédé améliore ainsi l'expérience utilisateur en réduisant le risque de confusion pour l'utilisateur et optimise l'utilisation de la mémoire du terminal en rendant pertinente les données obsolètes qui y sont mémorisées.

Dans le cadre de cette description, on entend par agent conversationnel un automate adapté pour répondre automatiquement à des messages envoyés par un utilisateur. Un tel agent conversationnel est notamment adapté pour interpréter des commandes ou des mots clefs compris dans des messages qu'il reçoit. En particulier, un tel agent conversationnel peut être configuré pour permettre à un utilisateur de réaliser une transaction en échangeant des messages à partir d'une messagerie instantanée. De tels agents conversationnels sont généralement mis en œuvre par des programmes informatiques exécutés sur des serveurs disposant d'interfaces de communication adaptées pour recevoir et émettre des messages instantanés, tels que des SMS, MMS ou d'autres types de messages, comme par exemple des messages conformes au standard RCS.

Selon un autre aspect, l'invention concerne un procédé de contrôle de validité d'au moins un message échangé dans une conversation de messagerie instantanée entre un terminal et un agent conversationnel selon la revendication 10.

Un agent conversationnel mettant en œuvre un tel procédé de contrôle peut ainsi contrôler la validité d'informations contenues dans des messages qu'il transmet à un terminal. Lorsqu'un message, ou une partie de message tel qu'un élément d'interaction compris dans un message devient obsolète suite à la survenue d'un évènement particulier, le serveur peut informer le terminal que ces messages contiennent des données obsolètes. Le terminal peut alors réagir en modifiant les messages de façon à ce qu'un utilisateur ne soit pas induit en erreur par une information périmée.

Selon une réalisation particulière le procédé de mise à jour est tel que l'élément d'interaction utilisateur est adapté pour déclencher une première action sur le terminal, l'étape de modification de l'élément d'interaction comprenant le remplacement de la première action par une seconde action.

Le procédé permet ainsi de remplacer une première action prévue pour être déclenchée lorsqu'un utilisateur du terminal utilise l'élément d'interaction par une seconde action, alternative à la première. Ainsi, lors de l'étape de restitution, le terminal teste la valeur de l'indicateur de validité pour déterminer si l'élément est obsolète et remplace l'action initialement associée à l'élément d'interaction par une autre action adaptée au caractère obsolète de l'élément. De cette façon, le comportement n'est plus indéterminé lorsque l'utilisateur utilise un élément d'interaction compris dans un message devenu obsolète. Par exemple, une action prévue pour déclencher l'ouverture d'une page web pour suivre la livraison d'un colis peut être remplacée par une action provoquant l'affichage d'un message indiquant la date à laquelle le colis a été livré.

Selon un mode de réalisation particulier, le procédé de mise à jour est tel que l'élément d'interaction utilisateur est adapté pour déclencher une action sur le terminal, l'étape de modification de l'élément d'interaction comprenant la désactivation de ladite action.

Lorsque le terminal restitue un message comprenant un élément d'interaction dont l'action associée est devenue obsolète, le déclenchement de l'action par l'utilisateur n'est plus possible. Le terminal détermine que l'action associée à l'élément est devenue obsolète à partir de la valeur de l'indicateur de validité. Le procédé permet ainsi de prémunir un utilisateur du terminal sur lequel est mis en œuvre le procédé contre des actions sur des éléments d'interactions contenus dans des messages échangés précédemment, dont le résultat serait indéterminé. D'autre part, le procédé préserve ainsi l'intégrité du message : son contenu n'étant pas modifié, aucune information pertinente n'est perdue.

Selon une réalisation particulière du procédé de mise à jour, l'élément d'interaction utilisateur est adapté pour déclencher une première action sur le terminal, l'étape de modification de l'élément d'interaction comprenant l'ajout d'un indicateur visuel relatif à la validité de l'action.

Le procédé permet ainsi d'indiquer explicitement à l'utilisateur qu'une information contenue dans le message, et en particulier une action associée à un élément d'interaction est obsolète. De cette manière, le procédé permet d'éviter qu'un utilisateur ne tente d'utiliser un élément d'interaction. Une telle disposition a pour avantage d'éviter une dépense d'énergie qui serait engendrée par l'exécution par le terminal d'une action dont le résultat ne serait pas celui escompté par l'utilisateur. Par exemple, l'utilisateur sera incité à ne pas cliquer sur un lien de suivi de colis s'il lui est explicitement indiqué que l'action n'aboutira pas. L'indication visuelle peut prendre différentes formes, comme par exemple celle d'un message, une modification de la couleur de l'élément d'interaction ou encore la modification ou l'ajout d'un texte associé à l'élément d'interaction ou au message. L'ajout d'un indicateur visuel peut être cumulé à la désactivation d'une action associée à l'élément et/ou à un remplacement de cette action par une action alternative.

Selon un mode particulier de réalisation, le procédé de mise à jour est tel que l'évènement détecté comprend au moins un identifiant adapté pour identifier au moins un élément d'interaction utilisateur compris dans au moins un message de la conversation.

Le procédé prévoit d'associer un identifiant à un élément d'interaction. L'événement détecté lors de l'étape de détection comprend également un ou plusieurs identifiants. Ainsi, seuls les messages dont l'identifiant est indiqué dans l'événement sont sélectionnés. Il est ainsi possible de mettre à jour uniquement les messages concernés par l'événement.

Selon un mode particulier de réalisation du procédé de mise à jour, le procédé est tel que l'événement est l'échange d'un nouveau message.

De cette façon, le procédé permet de mettre à jour les structures de données comprises dans les messages échangés avec un agent conversationnel lorsqu'un nouveau message est reçu ou envoyé. Par exemple, à la réception d'un tel message, les indicateurs de validité compris dans les messages échangés précédemment dans la même conversation sont modifiés afin de traduire l'obsolescence de données qu'ils peuvent contenir.

Par exemple, lorsqu'un premier message est reçu en provenance d'un agent conversationnel et que ce message comporte un champ susceptible de devenir obsolète, c'est-à-dire comportant un indicateur de validité traduisant une information dont la pérennité n'est pas assurée, la réception d'un second message en provenance du même agent conversationnel provoque l'exécution des étapes du procédé. Par exemple, lorsqu'un agent conversationnel émet un premier message comprenant un lien pour suivre l'acheminement d'un colis, la réception par le terminal d'un message ultérieur en provenance de cet agent conversationnel provoque l'exécution des étapes du procédé et une mise à jour du premier message.

En variante, l'évènement n'est déclenché que lorsque le message qui en est à l'origine comprend une caractéristique particulière. De cette manière, un agent conversationnel peut déclencher une mise à jour lorsque sa logique de service détermine que des messages envoyés ou reçus précédemment par le terminal sont devenus obsolètes.

Dans un mode particulier de réalisation du procédé de mise à jour, le message échangé comporte un champ dénotant l'obsolescence d'au moins un message échangé dans la conversation.

Le terminal peut ainsi identifier directement les messages devenus obsolètes. Un tel champ comporte par exemple un identifiant de message et/ou un identifiant d'un élément compris dans un ou plusieurs messages. De cette façon, la modification des messages peut être sélective.

Selon une réalisation particulière du procédé de mise à jour, l'événement est l'expiration d'un délai.

Le procédé permet ainsi une mise à jour des messages à intervalles réguliers ou à un moment prédéterminé. Par exemple, lorsqu'un message comprend un élément d'interaction associé à une date, la valeur de l'indicateur de validité est modifiée lorsque la date comprise dans ce message est dépassée.

Selon un autre aspect, l'invention concerne un dispositif de mise à jour d'au moins un message échangé dans une conversation de messagerie instantanée entre le dispositif et un agent conversationnel selon la revendication 9.

Selon encore un autre aspect, l'invention concerne aussi un dispositif de contrôle de validité d'au moins un message échangé dans une conversation de messagerie instantanée entre le dispositif et un terminal selon la revendication 11.

Selon une réalisation particulière, l'invention concerne un terminal comprenant un dispositif de mise à jour et/ou un dispositif de contrôle, tels que décrit ci-dessus.

Dans un mode particulier de réalisation, les différentes étapes du procédé sont déterminées par des instructions de programmes d'ordinateurs.

En conséquence, l'invention vise également un programme d'ordinateur comportant des instructions pour l'exécution des étapes du procédé de mise à jour et/ou des instructions pour l'exécution des étapes du procédé de contrôle, lorsque ledit programme est exécuté par un processeur. -

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes du procédé de mise à jour et/ou des instructions pour l'exécution des étapes du procédé de contrôle.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de mise à jour tel que défini ci-dessus.

Les terminaux, dispositifs et programmes présentent au moins des avantages analogues à ceux conférés par le procédé de mise à jour correspondant.

### Liste des figures

D'autres caractéristiques et avantages du procédé apparaîtront plus clairement à la lecture de la description suivante d'un mode de réalisation particulier, donné à titre de simple exemple illustratif et non limitatif, et des dessins annexés, parmi lesquels :
- La figure 1a illustre une architecture réseau adaptée pour la mise en œuvre du procédé de mise à jour selon un mode particulier de réalisation de l'invention,
- La figure 1b illustre une architecture réseau adaptée pour la mise en œuvre du procédé de mise à jour selon un mode particulier de réalisation de l'invention,
- La figure 2 illustre un terminal sur l'écran duquel sont affichés des messages sous forme d'une vue conversationnelle classique,
- La figure 3a illustre les principales étapes du procédé de mise à jour selon un mode particulier de réalisation de l'invention,
- La figure 3b illustre les principales étapes du procédé de contrôle selon un mode particulier de réalisation de l'invention,
- La figure 4 représente de manière simplifiée l'architecture d'un dispositif adapté pour mettre en oeuvre le procédé de mise à jour selon un mode de réalisation particulier.
- La figure 5 représente de manière simplifiée l'architecture d'un dispositif adapté pour mettre en oeuvre le procédé de contrôle selon un mode de réalisation particulier.

### Description détaillée d'un premier mode de réalisation

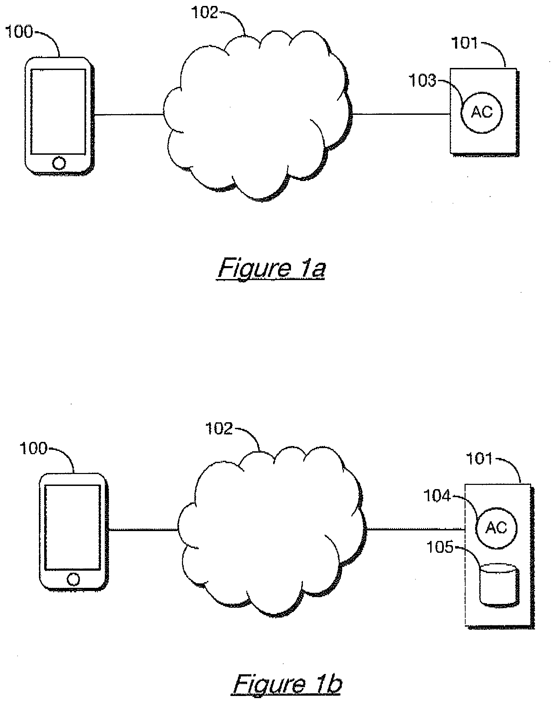

La figure 1 illustre une architecture adaptée pour mettre en œuvre le procédé de mise à jour selon un mode particulier de réalisation de l'invention. Une telle architecture comprend un terminal de communication 100 configuré pour communiquer au travers d'un réseau de communication 102 avec un serveur 101.

Le serveur 101 comprend un agent conversationnel 103 adapté pour répondre automatiquement à des messages envoyés par des terminaux, et en particulier pour répondre aux messages envoyés par le terminal 100. Ainsi, le terminal 100 peut interagir avec l'agent conversationnel. Ces interactions peuvent correspondre à une transaction, une négociation, une réservation ou tout autre échange permettant au terminal 100 ou à son utilisateur d'obtenir un service. L'agent conversationnel est programmé pour répondre aux messages selon une logique de service déterminée par un automate d'état. L'automate mis en œuvre dans l'agent conversationnel 103 est en particulier adapté pour permettre à un terminal de passer une commande via une messagerie instantanée afin d'acheter et se faire livrer un produit. Bien entendu, le procédé peut être appliqué à toutes sortes de services offerts par un agent conversationnel, comme effectuer des réservations pour le compte du terminal 100 auprès d'un cinéma, d'un restaurant, d'un moyen de transport, d'un loueur de véhicule, etc... Selon d'autres exemples, un tel agent conversationnel peut être adapté pour commander des biens ou des services, obtenir une information particulière telle que des prévisions météorologiques ou encore être intégré à un équipement connecté tel qu'un distributeur automatique, borne de paiement d'un parking, etc...

Le réseau 102 est un réseau de communication permettant au terminal 100 de communiquer avec d'autres équipements, et en particulier avec le serveur 101 sur lequel est mis en œuvre l'agent conversationnel 103. Le réseau de communication peut être un réseau cellulaire tel qu'un réseau GSM, 3G ou encore 4G, ou bien encore un réseau Internet auquel le terminal peut accéder par l'intermédiaire par exemple d'une connexion Wifi ou cellulaire.

Le terminal 100 est ici un téléphone mobile de type « smartphone » disposant de moyens de communications adaptés pour se connecter à un ou plusieurs réseaux de communication, tels que des réseaux Wifi ou des réseaux cellulaires, ainsi que d'une mémoire et d'un processeur adaptés pour exécuter des instructions de programme d'ordinateur. Le procédé décrit ci-après peut toutefois être mise en œuvre sur d'autres types terminaux, tels que sur une tablette, un objet connecté, un tableau de bord de véhicule ou encore un ordinateur personnel, par exemple dans un logiciel de messagerie. Le terminal 100 est en outre adapté pour communiquer selon au moins un protocole de messagerie instantanée avec d'autres terminaux ou dispositifs. Par exemple, le terminal 100 peut émettre et recevoir des messages de type SMS (Short Message Service) par l'intermédiaire d'un réseau cellulaire, ou encore mettre en œuvre le standard RCS (Rich Communication Suite), le protocole SIP SIMPLE, Jabber ou tout autre protocole adapté pour envoyer et recevoir des messages. En particulier, le terminal 100 peut échanger des messages instantanés avec le serveur 101 au travers du réseau 102.

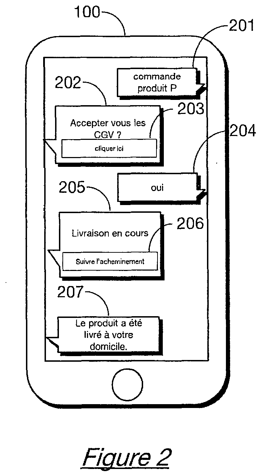

La figure 2 illustre un échange de messages au cours duquel le terminal 100 effectue la commande d'un produit P auprès de l'agent conversationnel 103. Cet exemple illustre une interaction simple avec un agent conversationnel. Il est entendu que d'autres interactions plus complexes, mettant en œuvre des échanges de messages plus ou moins nombreux peuvent être envisagées.

On distingue un premier message 201 émis par le terminal 100 à destination du serveur 101. Ce message comporte classiquement un identifiant du destinataire et un message textuel dans lequel l'utilisateur du terminal 100 demande à effectuer une réservation auprès d'un service. A la réception du message 201, l'agent conversationnel interprète le champ textuel et initialise un automate d'état adapté pour traiter la commande selon une logique de service propre à l'agent conversationnel.

En réponse à ce premier message, l'agent conversationnel émet un nouveau message 202 demandant à l'utilisateur du terminal d'accepter les conditions générales de ventes. Le message 202 comprend un libellé textuel et un élément d'interaction 203 permettant à l'utilisateur de consulter les conditions générales de ventes. Pour cela, à l'élément d'interaction 203 est associée une action qui, lorsqu'elle est déclenchée par l'utilisateur, permet d'ouvrir dans un navigateur internet une page web particulière correspondante sur laquelle sont publiées les conditions générales de ventes du service de commande.

L'utilisateur accepte les conditions générales de vente en envoyant un message 204 en réponse au message 202.

Le message 205 retourné par l'agent conversationnel comprend une indication textuelle selon laquelle la commande est en cours de livraison, et un élément d'interaction offrant la possibilité à l'utilisateur du terminal d'obtenir des détails quant à l'acheminement du produit commandé. Pour cela, l'élément d'interaction est associé à une action qui, lorsqu'elle est déclenchée par l'utilisateur, provoque l'ouverture d'une page web sur le site web d'un transporteur de marchandise permettant d'obtenir des détails sur l'acheminement du colis commandé.

Enfin, lorsque le produit à bien été reçu par son destinataire, un message 207 est reçu en provenance de l'agent conversationnel afin de clôturer la commande.

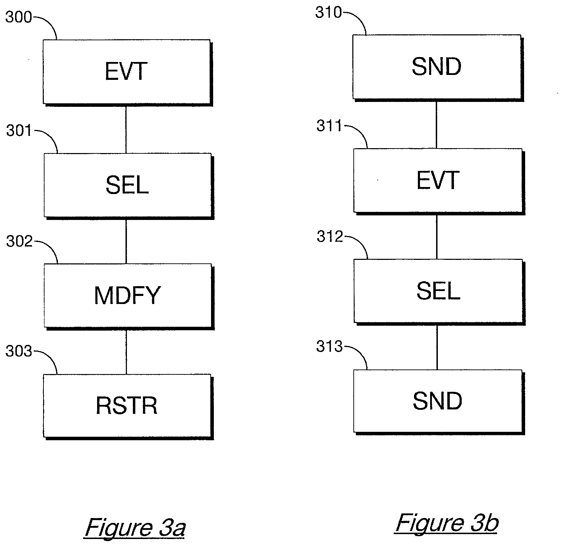

Un mode particulier de réalisation du procédé de mise à jour va maintenant être présenté en référence aux figures 2 et 3.

On entend par conversation un ensemble de messages échangés entre au moins deux correspondant sur un thème donné. La conversation peut avoir pour objet une transaction financière, une réservation ou encore une commande. Les messages échangés entre le terminal 100 et l'agent conversationnel 103 pour passer une commande constituent par exemple une conversation au sens du présent exposé.

Selon une réalisation particulière de l'invention, afin de distinguer des messages appartenant à différentes conversations ayant lieu entre les mêmes correspondants, les messages peuvent comprendre un identifiant de regroupement. Ainsi, les messages 201, 202, 204, 205 et 207 partagent un même identifiant de regroupement et appartiennent à la même conversation.

Cet identifiant peut par exemple être construit à partir de l'identifiant d'appel du terminal 100 et de celui de l'agent conversationnel, auxquels est par exemple ajoutée l'heure d'émission du premier message. Selon un mode particulier de réalisation il peut s'agir d'un identifiant unique obtenu auprès d'un serveur dédié ou calculé par le terminal par un générateur pseudo-aléatoire connu de l'homme du métier.

Un tel identifiant de regroupement permet ainsi d'identifier de manière non équivoque une transaction particulière entre le terminal 100 et l'agent conversationnel 103. Il est alors possible, tant pour l'agent conversationnel que pour le terminal 100, d'interpréter de façon cohérente plusieurs conversations simultanée, même quand des messages relatifs à une première et une seconde conversation sont intercalés.

Ainsi, une nouvelle conversation est initiée par l'envoi du message 201 à destination de l'agent conversationnel 103.

Parmi les messages échangés au cours de la conversation illustrée sur la figure 2, on peut noter que le message 202 comporte un élément d'interaction utilisateur 203. Lorsqu'il reçoit un tel message, le terminal 100 en interprète le contenu et restitue l'information qu'il contient de manière appropriée. En l'espèce, le message 202 contient des données structurées selon une syntaxe particulière décrivant à la fois un contenu et la façon dont ce contenu doit être restitué par le terminal, comme par exemple une syntaxe XML (Extensible Markup Language), HTML (HyperText Markup Language) ou tout autre langage de description d'interface appropriée.

Par exemple, le message 202 peut prendre la forme suivante :

```
 <message id="202" idr="999" from="103" to "100" >
      <label> Accepter-vous les CGV ?</label>
      <interaction>
             <button type="button" target="http://www.xyz.com/cgv"> cliquer ici </button>
      </interaction>
      </message>
```

Le message 205 comporte également un élément d'interaction 206.

Toutefois, le message 205 se distingue d'un message selon l'art antérieur tel que le message 202 en ce qu'il comporte en outre un indicateur de validité associé à l'élément d'interaction 203. Un tel champ prend par exemple la forme d'une valeur booléenne et dénote le caractère permanent ou temporaire de la validité de l'action associée à l'élément d'interaction. Par exemple, l'émetteur du message affecte une valeur « vrai » à l'indicateur de validité pour dénoter le fait que l'action associée possède une validité temporaire. En l'espèce, alors que l'élément d'interaction 203 permet de déclencher l'ouverture d'une page web sur laquelle sont exposées les conditions générales de vente qui sont par nature intangible au cours de la transaction, l'élément d'interaction 206 permet d'accéder à une page web pour le suivi de l'acheminement du colis. Une telle action associée à l'élément d'interaction 206 possède une validité temporaire car elle devient obsolète lorsque le coli est effectivement livré.

Le message 205 peut par exemple prendre la forme suivante :

```
 <message id="205" idr="999" from="103" to "100" >
     <label> Livraison en cours </label>
     <interaction>
            <valid>TRUE</valid>
            <button type="button" target="http://www.xyz.com/follow"> Suivre l'acheminement
            </button>
     </interaction>
     </message>
```

L'indicateur de validité est ici compris entre les balises <valid> et possède la valeur « vrai » de façon à indiquer que l'action associée à l'interaction (ici matérialisée par l'attribut « target » de la balise « button ») a une validité temporaire. L'indicateur de validité peut tout aussi bien être transmis sous la forme d'un attribut de la balise « button » ou sous tout autre forme appropriée.

Les exemples de messages décrits ci-dessus comportent en outre un identifiant de message et un identifiant de regroupement, indiqués respectivement par les attributs « id » et « idr » de la balise message. A partir de ces identifiants, un terminal peut identifier un message particulier et/ou une conversation particulière.

Lors d'une première étape 300, un évènement relatif à l'obsolescence d'au moins un des messages d'une conversation de messagerie instantanée avec un agent conversationnel est détecté. La conversation correspond ici aux messages 201, 202, 204, 205 et 207 décrits ci-avant en référence à la figure 2. Ces messages, appartenant à la conversation, sont identifiés par l'attribut « idr » qui possède ici la valeur 999. De façon alternative, l'identifiant de regroupement peut être compris dans l'entête du message, dans son objet ou dans toute autre partie du message appropriée.

L'événement détecté correspond ici à la réception du message 207 par le terminal, mais il peut aussi correspondre à l'émission d'un message par le terminal 100. La réception du message 207 par le terminal 100 est en effet un évènement relatif à l'obsolescence d'un message de la conversation identifiée par l'identifiant de regroupement 999 puisqu'il indique que le produit commandé a été livré. Par conséquent, la réception du message 207 implique l'obsolescence de l'interaction comprise dans le message 205 informant l'utilisateur que la livraison est en cours.

Selon une réalisation particulière, le message 207 comporte un champ positionné selon la logique de service de l'agent conversationnel 103 indiquant explicitement ou non que certains messages reçus précédemment sont devenus obsolètes. Par exemple, le message peut comporter un ou plusieurs identifiants de messages émis précédemment par l'agent conversationnel et qui sont devenus obsolètes. De cette manière, l'agent conversationnel peut désigner précisément les messages qui doivent être mis à jour car ils contiennent des informations devenus obsolètes. Pour cela, l'agent conversationnel mémorise un contexte, par exemple dans une base de données, dans lequel il associe un identifiant de message et un caractère de validité temporaire selon une logique de service qui lui est propre. En l'espèce, l'agent conversationnel mémorise dans une base de données que l'élément d'interaction 206 du message 205 de la conversation 999 deviendra obsolète lorsque le colis sera livré. Lorsque l'agent conversationnel est informé de la livraison effective du colis, il émet un message 207 à destination du terminal 100 comprenant l'identifiant de conversation 999 et une indication selon laquelle l'élément d'interaction 206 est obsolète. Dans un tel, mode de réalisation, l'indicateur de validité du message 205 n'est pas transmis au terminal, car le message 207 suffit à identifier les éléments devenus obsolètes.

Selon un autre exemple, le message 207 peut comporter une caractéristique selon laquelle ce message est le dernier message de la conversation, c'est-à-dire selon laquelle il est le dernier des messages associés à un même identifiant de regroupement. Une telle caractéristique peut être utilisée par le terminal pour déterminer que les messages reçus au préalable et comportant un indicateur de validité temporaire sont devenus obsolètes. Par exemple, le message 207 peut comporter une information sur la progression du processus de commande, ladite information indiquant que le message correspond par exemple à la troisième étape d'un processus de commande comportant 3 étapes. Toute autre indication permettant au terminal 100 de déduire que le message est le dernier message de l'interaction peut également être utilisée, comme par exemple une valeur booléenne qui indique que le message est le dernier message de la conversation lorsqu'elle est vraie.

Selon un mode de réalisation particulier, l'évènement détecté est l'expiration d'un délai. Par exemple, lorsqu'un terminal reçoit un message comportant une confirmation de réservation pour une date donnée et un élément d'interaction permettant d'annuler cette réservation, l'action d'annulation devient obsolète dès lors que la date de la réservation est dépassée. Pour cela, lorsque le terminal 100 reçoit un message comprenant une date et un élément d'interaction associé à un indicateur de validité temporaire, une alerte est configurée pour déclencher un évènement lorsque la date est dépassée. Le terminal peut alors détecter un tel évènement à l'étape 300 lorsqu'il se produit.

Selon encore une réalisation particulière, l'événement détecté est une action utilisateur sur un bouton ou un lien prévu à cet effet. Un tel bouton peut être proposé à l'utilisateur sur une interface du terminal pour « nettoyer » l'historique des messages.

Lorsqu'un évènement est détecté à l'étape 300, le terminal sélectionne à l'étape 301 les messages de la conversation dont l'indicateur de validité dénote une validité temporaire de l'élément d'interaction associé. Pour cela, le terminal obtient la liste des messages appartenant à la conversation identifiée dans l'évènement détecté à l'étape 300, en effectuant par exemple une recherche dans une base de données de stockage des messages. Le terminal analyse ensuite les messages obtenus et sélectionne les messages comportant un indicateur de validité dénotant un élément devenu obsolète. En l'espèce, le terminal sélectionne le message 205 car il appartient à la conversation dont l'identifiant de regroupement est identique à celui du message 207 et parce qu'il comporte un indicateur de validité dont la valeur est positionnée à « vrai » pour indiquer que l'action associée à l'élément d'interaction 206 a une validité temporaire. Bien entendu, lorsque plusieurs messages de la conversation comprennent un ou plusieurs indicateurs de validité dont la valeur dénote la validité temporaire d'un élément d'interaction, l'ensemble des messages répondant à ces critères est sélectionné.

Lors de l'étape 302, les messages sélectionnés sont modifiés. En particulier, la modification comprend la modification de la valeur de l'indicateur de validité dans les messages sélectionnés. L'indicateur de validité temporaire associé à l'élément 206 du message 205 est ainsi positionné à « faux » pour indiquer que l'action associée est désormais obsolète. Pour cela, le terminal met en œuvre un analyseur XML, HTML ou tout autre analyseur adapté pour analyser le contenu des messages afin de localiser et modifier l'indicateur de validité temporaire. En l'espèce, l'analyseur est mis en œuvre pour modifier la valeur de la balise <valid> afin de lui affecter la valeur « vrai».

Enfin, à l'étape 303, le terminal restitue les messages modifiés selon la valeur de l'indicateur de validité. Lors de cette étape de restitution, le terminal désactive les éléments d'interactions dont l'indicateur de validité temporaire est positionné à « faux ». La désactivation peut être obtenue en insérant par exemple l'attribut « disabled » de l'élément « button » dans le contenu du message, lorsqu'il s'agit d'un message au format HTML. Cette modification est par exemple réalisée par la mise en œuvre d'un analyseur adapté au format du message à modifier, une détection d'un ou plusieurs indicateurs de validité dont la valeur est positionnée à « faux », et une modification d'un attribut de l'élément d'interaction associé à cet indicateur. En variante, la modification peut consister en la suppression de l'action associée à l'élément d'interaction, au masquage de l'élément d'interaction, à une modification de sa couleur, en un remplacement de l'action par une action alternative, comme par exemple par une action visant à afficher un message informant l'utilisateur que l'action n'est plus disponible, ou encore en l'ajout d'un texte explicatif associé à l'élément d'interaction.

### Description d'un second mode de réalisation

Selon un mode particulier de réalisation, le terminal 100 échange des messages instantanés avec un agent conversationnel 104 dans le cadre d'une conversation. Les messages échangés ont été décrits en référence à la figure 2. L'agent conversationnel 104 met en œuvre un procédé de contrôle de validité du contenu d'un message de la conversation.

Lors d'une première étape 310, l'agent conversationnel émet à destination du terminal 100 un message comprenant au moins un élément d'interaction associé à une donnée de validité. Pour cela, il mémorise dans une base de données 105 un indicateur de validité temporaire en association avec un élément d'un message envoyé, comme par exemple un élément d'interaction tel que décrit ci-avant ou tout autre partie ou contenu du message, ainsi qu'un identifiant de message et/ou de l'élément du message. Par exemple, lors de l'envoi du message 205 à destination du terminal 100, l'agent conversationnel 103 mémorise dans la base de données 105 du serveur 101, le fait que l'élément d'interaction 206 du message 205 possède une validité temporaire. Le fait qu'un tel élément possède une validité temporaire est déterminé par la logique de service de l'agent conversationnel, cette logique de service étant par exemple mise en œuvre par un automate d'état prédéterminé. Le message 205 envoyé au terminal 100, et/ou l'élément d'interaction 206, est alors associé à un indicateur de validité temporaire dans la base de données 105.

Lors d'une étape 311, l'agent conversationnel 104 détecte un évènement relatif à l'obsolescence d'au moins un des messages émis précédemment à destination du terminal 100. Un tel évènement est par exemple un changement d'état de l'automate définissant la logique de service de l'agent conversationnel. Par exemple, l'obtention d'une information selon laquelle une commande a été expédiée ou livrée par un transporteur provoque un changement d'état de l'automate de l'agent conversationnel. Un tel changement d'état est un exemple d'événement relatif à l'obsolescence d'un message ou d'une partie de message dès lors qu'il rend obsolète une information contenue dans le message. D'autres événements susceptibles de rendre obsolète des informations contenues dans des messages envoyés peuvent être détectés par l'agent conversationnel, comme par exemple l'expiration d'un délai, la réception d'un message particulier, en provenance du terminal 100, la réception d'une preuve de paiement en provenance d'un organisme financier. Pour mettre en œuvre la détection de tels événements, une interface de programmation (API pour application Programing Interface) adaptée peut être mise en place sur le serveur 101.

A l'étape 312, l'agent conversationnel 104 recherche et sélectionne dans la base de données 105 les messages ou éléments de messages devenus obsolètes suite à l'événement détecté à l'étape 311. Les messages ou éléments de messages dont la validité est affectée par l'événement sont déterminés par une logique de service propre à l'agent conversationnel. L'agent conversationnel 104 peut par exemple comprendre une règle selon laquelle la détection d'un évènement correspondant à la livraison d'un colis rend obsolète le message 205 relatif à l'acheminement du colis. Différentes règles peuvent être mises en oeuvre selon les évènements détectés et le type des messages envoyés. Par exemple, dans le cas d'un automate prenant des réservations pour un restaurant, un message permettant à l'utilisateur d'annuler une réservation peut être rendu obsolète lorsque la date de la réservation est dépassée.

A l'étape 313, lorsqu'au moins un message est sélectionné à l'étape 312, c'est-à-dire lorsqu'au moins un des messages émis précédemment est devenu obsolète, l'agent conversationnel transmet au terminal 100 la liste des messages sélectionnés. Pour cela, l'agent conversationnel génère un nouveau message comportant un ou plusieurs champs dénotant l'obsolescence des au moins un message de la conversation qui ont été sélectionnés à l'étape 312. Pour cela, l'agent conversationnel 104 insère dans le message généré, en utilisant un champ approprié, des identifiants de messages et/ou d'éléments des messages sélectionnés. Les indicateurs de validité associés à ces messages et qui ont été mémorisés dans la base de données 105 peuvent alors être supprimés de la base de données 105. Par exemple, l'agent conversationnel 104 insère un identifiant du message 205 et/ou de l'élément d'interaction 206 dans le message 207.

Le terminal 100 met en oeuvre le procédé de mise à jour selon un mode particulier de réalisation.

Lors de l'étape 300, le terminal 100 détecte que le message 207 comprend au moins un identifiant d'un message échangé précédemment et devenu obsolète.

Le terminal sélectionne à l'étape 301, parmi les messages échangés avec l'agent conversationnel 104, les messages dont les identifiants sont compris dans le message 207 et/ou les messages comprenant des éléments dont les identifiants sont compris dans le message 207. La sélection est effectuée par le terminal selon une caractéristique du message 207, c'est-à-dire selon un ou plusieurs identifiants de messages ou d'éléments de messages compris dans le message 207 et associés par l'agent conversationnel 104 à un indicateur de validité temporaire. Par exemple, le message 207 comprend l'identifiant du message 205 et/ou l'identifiant de l'élément d'interaction 206.

Le terminal modifie les messages sélectionnés lors d'une étape 302. La modification comprend par exemple la suppression d'une l'action associée à un élément d'interaction devenu obsolète, ou encore le masquage de cet élément d'interaction. La modification peut encore consister en une modification de sa couleur, en un remplacement de l'action par une action alternative, comme par exemple par une action visant à afficher un message informant l'utilisateur que l'action n'est plus disponible, ou encore en l'ajout d'un texte explicatif associé à l'élément d'interaction. Par exemple, le terminal désactive l'action associée à l'élément 206 du message 205 de manière à ce qu'une action de l'utilisateur sur le bouton 206 ne déclenche pas une action indéterminée.

Suite à la modification du message, le terminal restitue le message modifié sur l'écran du terminal à l'étape 303.

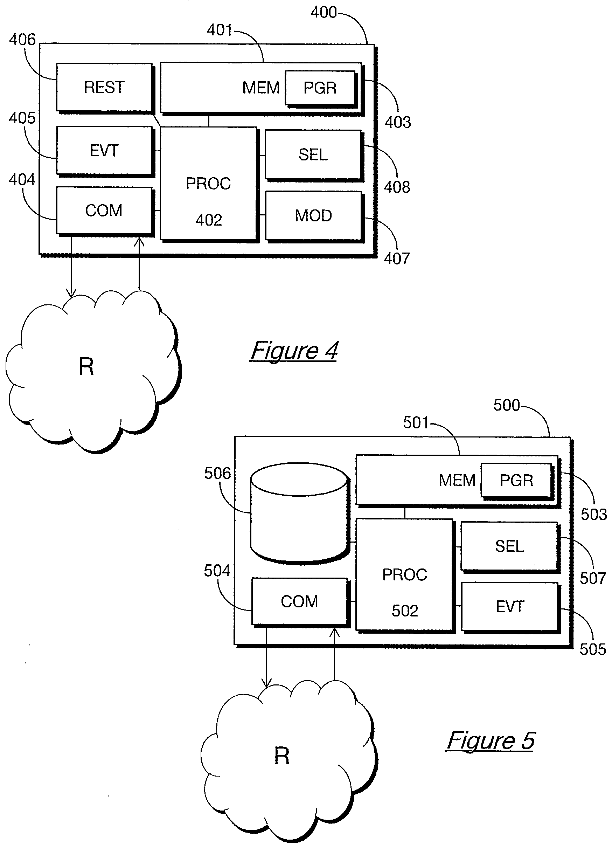

La figure 4 illustre, selon un mode particulier de réalisation de l'invention, un dispositif 400 adapté pour mettre en œuvre le procédé de mise à jour.

Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé de mise à jour tel que décrit dans le présent document, en référence à la figure 3a, et notamment les étapes de détection d'un évènement relatif à l'obsolescence d'au moins un des messages de la conversation, de sélection selon une caractéristique de l'évènement détecté, d'au moins un message de la conversation dont l'indicateur de validité dénote une validité temporaire de l'élément d'interaction associé, de modification de l'indicateur de validité dans les messages sélectionnés, et de restitution des messages modifiés selon une valeur de l'indicateur de validité.

À l'initialisation, les instructions du programme d'ordinateur 403 sont par exemple chargées dans une mémoire RAM (Random Access Memory en anglais) avant d'être exécutées par le processeur de l'unité de traitement 402. Le processeur de l'unité de traitement 402 met en œuvre les étapes du procédé de mise à jour selon les instructions du programme d'ordinateur 403.

Pour cela, la mémoire 401 est en outre adaptée pour mémoriser au moins un message échangé avec un agent conversationnel, le message comportant au moins un indicateur de validité associé à un ou plusieurs éléments contenus dans le message.

Le dispositif 400 comprend aussi des moyens de communication 404, comme par exemple une interface réseau COM (par exemple une interface WiFi, 3G, 4G ou ethernet), permettant au dispositif de se connecter à un réseau de télécommunication R et d'échanger des données avec d'autres dispositifs par l'intermédiaire du réseau de télécommunications, et en particulier d'échanger des messages avec un agent conversationnel.

Le dispositif 400 comprend également un module de détection 405 adapté pour détecter un évènement relatif à l'obsolescence d'au moins un des messages d'une conversation. Un tel module peut être mis en oeuvre par des instructions de programmes d'ordinateur stockées dans la mémoire 401 et. adaptées pour être exécutées par le processeur de l'unité de traitement 402.

Le dispositif comprend en outre un module 408 de sélection adapté pour sélectionner, au moins un message de la conversation selon une caractéristique de l'événement détecté par le module de détection 405. Pour cela, le module 405 peut être mis en œuvre par des instructions de programme d'ordinateur adaptées pour être exécutées par le processeur de l'unité de traitement 402 et configurées pour obtenir la liste des messages appartenant à la conversation identifiée dans l'événement détecté à l'étape 300, en effectuant par exemple une recherche dans une base de données de stockage des messages grâce à une requête SQL (Simple Query Language) appropriée.

Le dispositif comprend aussi un module de modification 407 adapté pour modifier l'indicateur de validité dans les messages sélectionnés par le module de sélection 408. Pour cela, le module 407 peut être mis en œuvre par des instructions de programme d'ordinateur adaptées pour être exécutées par le processeur de l'unité de traitement 402 et configurées pour d'une part identifier dans un message, grâce à un analyseur adapté (comme par exemple un analyseur HTML ou XML), au moins un indicateur de validité d'un élément du message, et d'autre part modifier la valeur de l'indicateur de validité, la nouvelle valeur étant associée au fait que l'élément est obsolète.

Le dispositif comporte enfin un module de restitution 406 adapté pour restituer des messages modifiés selon une valeur de l'indicateur de validité. Pour cela, le module 406 peut être mis en œuvre par des instructions de programme d'ordinateur adaptées pour être exécutées par le processeur de l'unité de traitement 402 et configurées pour désactiver les éléments d'interactions dont l'indicateur de validité temporaire est positionné à une valeur particulière. Par exemple, le programme d'ordinateur est configuré pour insérer exemple un attribut « disabled » dans la description d'interface de l'élément « button » d'un message au format HTML lorsque cet élément est associé à un indicateur de validité dénotant un élément temporairement valide. Cette modification est par exemple réalisée par la mise en œuvre d'un analyseur adapté au format du message à modifier, une détection d'un ou plusieurs indicateurs de validité dont la valeur est positionnée à « vrai », et une modification d'un attribut de l'élément d'interaction associé à cet indicateur. En variante, la modification peut consister en la suppression de l'action associée à l'élément d'interaction, au masquage de l'élément d'interaction, à une modification de sa couleur, en un remplacement de l'action par une action alternative, comme par exemple par une action visant à afficher un message informant l'utilisateur que l'action n'est plus disponible, ou encore en l'ajout d'un texte explicatif associé à l'élément d'interaction.

La figure 5 illustre, selon un mode particulier de réalisation de l'invention, un dispositif 500 adapté pour mettre en œuvre le procédé de contrôle.

Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé de contrôle tel que décrit dans le présent document, en référence à la figure 3b, et notamment les étapes de détection d'un évènement relatif à l'obsolescence d'au moins un des messages de la conversation, de sélection, selon une caractéristique de l'évènement détecté, d'au moins un message de la conversation comprenant un élément d'interaction associé à un indicateur de validité temporaire, et de transmission, à destination du terminal, d'un message comprenant au moins un identifiant d'au moins un élément d'interaction associé à un indicateur de validité temporaire.

À l'initialisation, les instructions du programme d'ordinateur 503 sont par exemple chargées dans une mémoire RAM avant d'être exécutées par le processeur de l'unité de traitement 502. Le processeur de l'unité de traitement 502 met en œuvre les étapes du procédé de contrôle selon les instructions du programme d'ordinateur 503.

Le dispositif 500 comprend aussi des moyens de communication 504, comme par exemple une interface réseau COM, permettant au dispositif de se connecter à un réseau de télécommunication R et d'échanger des données avec d'autres dispositifs par l'intermédiaire du réseau de télécommunications, et en particulier d'échanger des messages avec un terminal de communication. L'interface COM peut être par exemple une interface réseau WiFi, 3G, 4G ou encore une interface Ethernet et permet au dispositif de transmettre des messages comprenant au moins un élément d'interaction et des messages comprenant au moins un identifiant d'au moins un élément d'interaction associé à un indicateur de validité temporaire.

Le dispositif 500 comprend un module de détection 505 adapté pour détecter un évènement relatif à l'obsolescence d'au moins un des messages d'une conversation. Un tel module peut être mis en œuvre par des instructions de programmes d'ordinateur stockées dans la mémoire 501 et adaptées pour être exécutées par le processeur de l'unité de traitement 502.

Le dispositif comprend en outre un module 507 de sélection adapté pour sélectionner, au moins un message d'une conversation selon une caractéristique de l'événement détecté par le module de détection 505. Pour cela, le module 507 peut être mis en oeuvre par des instructions de programme d'ordinateur adaptées pour être exécutées par le processeur de l'unité de traitement 402 et configurées pour obtenir la liste des messages appartenant à la conversation identifiée dans l'événement détecté à l'étape 311, en effectuant par exemple une recherche, grâce à une requête SQL (Simple Query Language) appropriée, dans une base de données de stockage des messages en association avec des indicateurs de validité.

Le dispositif comprend aussi une base de données 506 adaptée pour mémoriser des indicateurs de validité temporaire en association avec des messages et/ou des éléments de messages, tels que des éléments d'interaction compris dans des messages.

## Revendications

1. Procédé de mise à jour d'au moins un message échangé dans une conversation de messagerie instantanée entre un terminal et un agent conversationnel, le procédé étant tel qu'il est mis en œuvre par le terminal et que le au moins un message comprend un élément d'interaction utilisateur destiné à être restitué par le terminal, l'élément d'interaction étant associé à un indicateur de validité déterminé selon une logique de service de l'agent conversationnel, et en ce qu'il comporte les étapes suivantes :
- détection (300) d'un évènement relatif à l'obsolescence d'au moins un des messages de la conversation,
- sélection, (301) selon une caractéristique de l'événement détecté, d'au moins un message de la conversation comprenant un élément d'interaction associé à un indicateur de validité,
- modification (302) de la valeur de l'indicateur de validité dans le au moins un message sélectionné par une valeur révélant l'obsolescence de l'élément d'interaction associé, et
- modification (303) de l'élément d'interaction du au moins un message sélectionné selon la valeur de l'indicateur de validité associé par désactivation, suppression, masquage, remplacement de l'action associée à l'élément d'interaction ou par l'ajout d'une information indiquant que l'élément d'interaction est obsolète.

2. Procédé selon la revendication 1 dans lequel l'élément d'interaction utilisateur est adapté pour déclencher une première action sur le terminal, l'étape de modification de l'élément d'interaction comprenant le remplacement de la première action par une seconde action.

3. Procédé selon la revendication 1 dans lequel l'élément d'interaction utilisateur est adapté pour déclencher une première action sur le terminal, l'étape de modification de l'élément d'interaction comprenant la désactivation de l'action.

4. Procédé selon l'une quelconque des revendications précédentes dans lequel l'élément d'interaction utilisateur est adapté pour déclencher une première action sur le terminal, l'étape de modification de l'élément d'interaction comprenant l'ajout d'un indicateur visuel relatif à la validité de l'action.

5. Procédé selon l'une quelconque des revendications précédentes dans lequel l'évènement détecté comprend au moins un identifiant adapté pour identifier au moins un élément d'interaction utilisateur compris dans au moins un message de la conversation.

6. Procédé selon l'une quelconque des revendications précédentes dans lequel l'événement détecté est l'échange d'un nouveau message.

7. Procédé selon la revendication 6 dans lequel le message échangé comporte un champ dénotant l'obsolescence d'au moins un message échangé dans la conversation.

8. Procédé selon l'une quelconque des revendications précédentes dans lequel l'événement détecté est l'expiration d'un délai.

9. Dispositif de mise à jour d'au moins un message échangé dans une conversation de messagerie instantanée entre le dispositif et un agent conversationnel, le au moins un message comprenant un élément d'interaction utilisateur destiné à être restitué par le dispositif, l'élément d'interaction étant associé à un indicateur de validité déterminé selon une logique de service de l'agent conversationnel, le dispositif étant tel qu'il comporte un processeur et une mémoire contenant des instructions adaptées pour être exécutées par le processeur, le processeur étant configuré par les instructions pour mettre en œuvre des modules de:
- détection (404) d'un évènement relatif à l'obsolescence d'au moins un des messages de la conversation,
- sélection (405), selon une caractéristique de l'événement détecté, d'au moins un message de la conversation comprenant un élément d'interaction associé à un indicateur de validité,
- modification (406) de la valeur de l'indicateur de validité dans le au moins un message sélectionné par une valeur révélant l'obsolescence de l'élément d'interaction associé, et de
- modification (407) de l'élément d'interaction du au moins un message sélectionné selon la valeur de l'indicateur de validité associé par désactivation, suppression, masquage, remplacement de l'action associée à l'élément d'interaction ou par l'ajout d'une information indiquant que l'élément d'interaction est obsolète.

10. Procédé de contrôle de validité d'au moins un message échangé (310) dans une conversation de messagerie instantanée entre un terminal et un agent conversationnel, le procédé étant tel qu'il est mis en œuvre par l'agent conversationnel, que le au moins un message de la conversation comprend au moins un élément d'interaction utilisateur destinée à être restitué par le terminal et associé à un indicateur de validité déterminé selon une logique de service de l'agent conversationnel, qu'il mémorise l'identifiant du au moins un message de la conversation, et en ce qu'il comporte les étapes suivantes :
- détection (311) d'un évènement relatif à l'obsolescence d'au moins un des messages de la conversation,
- sélection, (312) selon une caractéristique de l'événement détecté, d'au moins un message de la conversation comprenant un élément d'interaction associé à un indicateur de validité dans lequel ledit élément d'interaction est obsolète, et
- transmission (313), à destination du terminal, d'un message comprenant au moins un identifiant d'un message sélectionné en vue d'une modification de l'élément d'interaction du au moins un message sélectionné par désactivation, suppression, masquage, remplacement de l'action associée à l'élément d'interaction ou par l'ajout d'une information indiquant que l'élément d'interaction est obsolète.

11. Dispositif de contrôle de validité d'au moins un message échangé dans une conversation de messagerie instantanée entre le dispositif et un terminal, le dispositif étant tel qu'il comporte un processeur et une mémoire contenant des instructions adaptées pour être exécutées par le processeur, en ce que le au moins un message comprend au moins un élément d'interaction utilisateur destinée à être restitué par le terminal et associé à un indicateur de validité déterminé selon une logique de service de l'agent conversationnel, le processeur étant configuré par les instructions pour mémoriser dans la mémoire du dispositif l'identifiant du au moins un message de la conversation et pour mettre en œuvre des modules de
- détection (505) d'un évènement relatif à l'obsolescence d'au moins un des messages mémorisé de la conversation,
- sélection, (507) selon une caractéristique de l'événement détecté, d'au moins un message mémorisé de la conversation comprenant un élément d'interaction associé à un indicateur de validité dans lequel ledit élément d'interaction est obsolète, et de
- transmission (504), à destination du terminal, d'un message comprenant au moins un identifiant d'un message sélectionné en vue d'une modification de l'élément d'interaction du au moins un message sélectionné par désactivation, suppression, masquage, remplacement de l'action associée à l'élément d'interaction ou par l'ajout d'une information indiquant que l'élément d'interaction est obsolète.

12. Terminal comportant un dispositif de mise à jour selon la revendication 9.

13. Serveur comprenant un dispositif de contrôle selon la revendication 11.

14. Programme d'ordinateur comportant des instructions pour l'exécution du procédé de mise à jour selon l'une quelconque des revendications 1 à 8, et/ou des instructions pour l'exécution du procédé de contrôle selon la revendication 10, lorsque le programme est exécuté par un processeur.

15. Support d'informations lisible par un ordinateur sur lequel est enregistré un programme d'ordinateur comprenant des instructions pour l'exécution des étapes du procédé de mise à jour selon l'une des revendications 1 à 8, et/ou des instructions pour l'exécution du procédé de contrôle selon la revendication 10.

## Patentansprüche

1. Verfahren zur Aktualisierung von mindestens einer Meldung, die in einer Instant-Messaging-Konversation zwischen einem Endgerät und einem konversationellen Agenten ausgetauscht wird, wobei das Verfahren so beschaffen ist, dass es vom Endgerät durchgeführt wird und dass die mindestens eine Meldung ein Benutzerinteraktionselement umfasst, das dazu bestimmt ist, vom Endgerät wiedergegeben zu werden, wobei das Interaktionselement mit einem Gültigkeitsindikator verknüpft ist, der nach einer Dienstlogik des konversationellen Agenten bestimmt wird, und **dadurch gekennzeichnet ist, dass** es die folgenden Schritte umfasst:
- Erkennen (300) mindestens eines Ereignisses bezüglich der Obsoleszenz mindestens einer der Meldungen der Konversation,
- Auswählen (301) von mindestens einer Meldung der Konversation, die ein mit einem Gültigkeitsindikator verknüpftes Interaktionselement umfasst, entsprechend einem Merkmal des erkannten Ereignisses,
- Ändern (302) des Wertes des Gültigkeitsindikators in der mindestens einen Meldung, der nach einem Wert ausgewählt wird, der die Obsoleszenz des verknüpften Interaktionselements zeigt, und
- Ändern (303) des Interaktionselements der mindestens einen Meldung, das nach dem Wert des verknüpften Gültigkeitsindikators ausgewählt wird, durch Deaktivieren, Löschen, Maskieren, Ersetzen der mit dem Interaktionselement verknüpften Aktion oder durch Hinzufügen einer Information, die angibt, dass das Interaktionselement obsolet ist.

2. Verfahren nach Anspruch 1, wobei das Benutzerinteraktionselement geeignet ist, eine erste Aktion am Endgerät auszulösen, wobei der Schritt des Änderns des Interaktionselements das Ersetzen der ersten Aktion durch eine zweite Aktion umfasst.

3. Verfahren nach Anspruch 1, wobei das Benutzerinteraktionselement geeignet ist, eine erste Aktion am Endgerät auszulösen, wobei der Schritt des Änderns des Interaktionselements das Deaktivieren der Aktion umfasst.

4. Verfahren nach einem der vorhergehenden Ansprüche, wobei das Benutzerinteraktionselement geeignet ist, eine erste Aktion am Endgerät auszulösen, wobei der Schritt des Änderns des Interaktionselements das Hinzufügen eines visuellen Indikators bezüglich der Gültigkeit der Aktion umfasst.

5. Verfahren nach einem der vorhergehenden Ansprüche, wobei das erkannte Ereignis mindestens eine Kennung umfasst, die geeignet ist, mindestens ein Benutzerinteraktionselement zu erkennten, das in der mindestens einen Meldung der Konversation enthalten ist.

6. Verfahren nach einem der vorhergehenden Ansprüche, wobei das erkannte Ereignis der Austausch einer neuen Meldung ist.

7. Verfahren nach Anspruch 6, wobei die ausgetauschte Meldung ein Feld umfasst, das die Obsoleszenz mindestens einer in der Konversation ausgetauschten Meldung umfasst.

8. Verfahren nach einem der vorhergehenden Ansprüche, wobei das erkannte Ereignis das Verstreichen einer Frist ist.

9. Vorrichtung zur Aktualisierung von mindestens einer Meldung, die in einer Instant-Messaging-Konversation zwischen der Vorrichtung und einem konversationellen Agenten ausgetauscht wird, wobei die mindestens eine Meldung ein Benutzerinteraktionselement umfasst, das das dazu bestimmt ist, vom Endgerät wiedergegeben zu werden, wobei das Interaktionselement mit einem Gültigkeitsindikator verknüpft ist, der nach einer Dienstlogik des konversationellen Agenten bestimmt wird, wobei die Vorrichtung so beschaffen ist, dass sie einen Prozessor und einen Speicher umfasst, der Anweisungen enthält, die geeignet sind, durch den Prozessor ausgeführt zu werden, wobei der Prozessor durch die Anweisungen konfiguriert wird, um Module zu Folgendem durchzuführen:
- Erkennen (404) eines Ereignisses bezüglich der Obsoleszenz von mindestens einer der Meldungen der Konversation,
- Auswählen (405) von mindestens einer Meldung der Konversation, die ein mit einem Gültigkeitsindikator verknüpftes Interaktionselement umfasst, entsprechend einem Merkmal des erkannten Ereignisses,
- Ändern (406) des Wertes des Gültigkeitsindikators in der mindestens einen Meldung, der nach einem Wert ausgewählt wird, der die Obsoleszenz des verknüpften Interaktionselements zeigt, und
- Ändern (407) des Interaktionselements der mindestens einen Meldung, das nach dem Wert des verknüpften Gültigkeitsindikators ausgewählt wird, durch Deaktivieren, Löschen, Maskieren, Ersetzen der mit dem Interaktionselement verknüpften Aktion oder durch Hinzufügen einer Information, die angibt, dass das Interaktionselement obsolet ist.

10. Verfahren zur Überwachung der Gültigkeit von mindestens einer Meldung (310), die in einer Instant-Messaging-Konversation zwischen einem Endgerät und einem konversationellen Agenten ausgetauscht wird, wobei das Verfahren so beschaffen ist, dass es durch den konversationellen Agenten durchgeführt wird, dass die mindestens eine Meldung der Konversation mindestens ein Benutzerinteraktionselement umfasst, das dazu bestimmt ist, vom Endgerät wiedergegeben zu werden, und mit einem Gültigkeitsindikator verknüpft ist, der nach einer Dienstlogik des konversationellen Agenten bestimmt wird, dass es sich die Kennung der mindestens einen Meldung der Konversation merkt und **dadurch gekennzeichnet ist, dass** es die folgenden Schritte umfasst:
- Erkennen (311) eines Ereignisses bezüglich der Obsoleszenz von mindestens einer der Meldungen der Konversation,
- Auswählen (312) von mindestens einer Meldung der Konversation, die ein Interaktionselement umfasst, das mit einem Gültigkeitsindikator verknüpft ist, in dem das Interaktionselement obsolet ist, entsprechend einem Merkmal des erkannten Ereignisses, und
- Senden (313) einer Meldung, die mindestens eine Kennung einer Meldung umfasst, die ausgewählt wird im Hinblick auf ein Ändern des Interaktionselements der mindestens einen ausgewählten Meldung durch Deaktivieren, Löschen, Maskieren, Ersetzen der mit dem Interaktionselement verknüpften Aktion oder durch Hinzufügen einer Information, die angibt, dass das Interaktionselement obsolet ist.

11. Vorrichtung zur Überwachung der Gültigkeit von mindestens einer Meldung, die in einer Instant-Messaging-Konversation zwischen der Vorrichtung und dem Endgerät ausgetauscht wird, wobei die Vorrichtung so beschaffen ist, dass sie einen Prozessor und einen Speicher umfasst, der Anweisungen enthält, die geeignet sind, durch den Prozessor ausgeführt zu werden, und **dadurch gekennzeichnet ist, dass** die mindestens eine Meldung mindestens ein Benutzerinteraktionselement umfasst, das dazu bestimmt ist, vom Endgerät wiedergegeben zu werden, und mit einem Gültigkeitsindikator verknüpft ist, der nach einer Dienstlogik des konversationellen Agenten bestimmt wird, wobei der Prozessor durch die Anweisungen konfiguriert wird, im Speicher der Vorrichtung die Kennung der mindestens einen Meldung der Konversation zu speichern und Module zu Folgendem durchzuführen:
- Erkennen (505) eines Ereignisses bezüglich der Obsoleszenz von mindestens einer der Meldungen der Konversation,
- Auswählen (507) von mindestens einer gespeicherten Meldung der Konversation, die ein Interaktionselement umfasst, das mit einem Gültigkeitsindikator verknüpft ist, in dem das Interaktionselement obsolet ist, entsprechend einem Merkmal des erkannten Ereignisses, und
- Senden (504) einer Meldung, die mindestens eine Kennung einer Meldung umfasst, die ausgewählt wird im Hinblick auf ein Ändern des Interaktionselements der mindestens einen ausgewählten Meldung durch Deaktivieren, Löschen, Maskieren, Ersetzen der mit dem Interaktionselement verknüpften Aktion oder durch Hinzufügen einer Information, die angibt, dass das Interaktionselement obsolet ist, an das Endgerät.

12. Endgerät, das eine Vorrichtung zur Aktualisierung nach Anspruch 9 umfasst.

13. Server, der eine Vorrichtung zur Überwachung nach Anspruch 11 umfasst.

14. Computerprogramm, das Anweisungen zur Ausführung des Verfahrens zur Aktualisierung nach einem der Ansprüche 1 bis 8 und/oder Anweisungen zur Ausführung des Verfahrens zur Überwachung nach Anspruch 10 umfasst, wenn das Programm durch einen Prozessor ausgeführt wird.

15. Speichermedium, das durch einen Computer lesbar ist und auf dem ein Computerprogramm gespeichert ist, das Anweisungen zur Ausführung der Schritte des Verfahrens zur Aktualisierung nach einem der Ansprüche 1 bis 8 und/oder Anweisungen zur Ausführung des Verfahrens zur Steuerung nach Anspruch 10 umfasst.

## Claims

1. Method for updating at least one message exchanged in an instant messaging conversation between a terminal and a conversational agent, the method being such that it is implemented by the terminal and that the at least one message comprises a user interaction element intended to be rendered by the terminal, the interaction element being associated with a validity indicator determined according to a service logic of the conversational agent, and such that it comprises the following steps:
- detection (300) of an event relating to the obsolescence of at least one of the messages of the conversation,
- selection (301), according to a characteristic of the detected event, of at least one message of the conversation comprising an interaction element associated with a validity indicator,
- modification (302) of the value of the validity indicator in the at least one selected message via a value revealing the obsolescence of the associated interaction element, and
- modification (303) of the interaction element of the at least one selected message according to the value of the associated validity indicator via deactivation, deletion, masking, or replacement of the action associated with the interaction element or via addition of an item of information indicating that the interaction element is obsolete.

2. Method according to Claim 1, in which the user interaction element is adapted to trigger a first action on the terminal, the step of modification of the interaction element comprising the replacement of the first action by a second action.

3. Method according to Claim 1, in which the user interaction element is adapted to trigger a first action on the terminal, the step of modification of the interaction element comprising the deactivation of the action.

4. Method according to any one of the preceding claims, in which the user interaction element is adapted to trigger a first action on the terminal, the step of modification of the interaction element comprising the addition of a visual indicator relating to the validity of the action.

5. Method according to any one of the preceding claims, in which the detected event comprises at least one identifier adapted to identify at least one user interaction element included in at least one message of the conversation.

6. Method according to any one of the preceding claims, in which the detected event is the exchange of a new message.

7. Method according to Claim 6, in which the message exchanged comprises a field denoting the obsolescence of at least one message exchanged in the conversation.

8. Method according to any one of the preceding claims, in which the detected event is the expiry of a time lag.

9. Device for updating at least one message exchanged in an instant messaging conversation between the device and a conversational agent, the at least one message comprising a user interaction element intended to be rendered by the device, the interaction element being associated with a validity indicator determined according to a service logic of the conversational agent, the device being such that it comprises a processor and a memory containing instructions adapted to be executed by the processor, the processor being configured by the instructions so as to implement modules for:
- detection (404) of an event relating to the obsolescence of at least one of the messages of the conversation,
- selection (405), according to a characteristic of the detected event, of at least one message of the conversation comprising an interaction element associated with a validity indicator,
- modification (406) of the value of the validity indicator in the at least one selected message via a value revealing the obsolescence of the associated interaction element, and for
- modification (407) of the interaction element of the at least one selected message according to the value of the associated validity indicator via deactivation, deletion, masking, or replacement of the action associated with the interaction element or via addition of an item of information indicating that the interaction element is obsolete.

10. Method for checking validity of at least one message exchanged (310) in an instant messaging conversation between a terminal and a conversational agent, the method being such that it is implemented by the conversational agent, that the at least one message of the conversation comprises at least one user interaction element intended to be rendered by the terminal and associated with a validity indicator determined according to a service logic of the conversational agent, that it stores in memory the identifier of the at least one message of the conversation, and such that it comprises the following steps:
- detection (311) of an event relating to the obsolescence of at least one of the messages of the conversation,
- selection (312), according to a characteristic of the detected event, of at least one message of the conversation comprising an interaction element associated with a validity indicator in which said interaction element is obsolete, and
- transmission (313), to the terminal, of a message comprising at least one identifier of a selected message with a view to a modification of the interaction element of the at least one selected message via deactivation, deletion, masking, or replacement of the action associated with the interaction element or via addition of an item of information indicating that the interaction element is obsolete.

11. Device for checking validity of at least one message exchanged in an instant messaging conversation between the device and a terminal, the device being such that it comprises a processor and a memory containing instructions adapted to be executed by the processor, such that the at least one message comprises at least one user interaction element intended to be rendered by the terminal and associated with a validity indicator determined according to a service logic of the conversational agent, the processor being configured by the instructions so as to store in the memory of the device the identifier of the at least one message of the conversation and so as to implement modules for:
- detection (505) of an event relating to the obsolescence of at least one of the stored messages of the conversation,
- selection (507), according to a characteristic of the detected event, of at least one stored message of the conversation comprising an interaction element associated with a validity indicator in which said interaction element is obsolete, and for
- transmission (504), to the terminal, of a message comprising at least one identifier of a selected message with a view to a modification of the interaction element of the at least one selected message via deactivation, deletion, masking, or replacement of the action associated with the interaction element or via addition of an item of information indicating that the interaction element is obsolete.

12. Terminal comprising an updating device according to Claim 9.

13. Server comprising a checking device according to Claim 11.

14. Computer program comprising instructions for the execution of the updating method according to any one of Claims 1 to 8, and/or instructions for the execution of the checking method according to Claim 10, when the program is executed by a processor.

15. Information medium readable by a computer on which is recorded a computer program comprising instructions for the execution of the steps of the updating method according to one of Claims 1 to 8, and/or instructions for the execution of the checking method according to Claim 10.
